# EUROPEAN PATENT APPLICATION

(11) **EP 2 884 445 A1**
(43) Date of publication of application: **17.06.2015**
(21) Application number: 14150835.8
(22) Date of filing: 10.01.2014
(51) Int. Cl.: G06Q 30/02

(54) **User participation concert making system and method for providing the same**

(30) Priority: 16.12.2013 KR 20130156338
(71) Applicant: JJS Media Co., LTD., Seoul 137-131 (KR)
(72) Inventor: Lee, Jae Seok, 706-968 Daegu (KR)
(74) Representative: Jansen, Cornelis Marinus

(57) **Abstract**

A user participation concert making system and a method for providing the same are disclosed herein. Provided herein is a user participation concert making system including a communicating module configured to receive information on a performing artist performing in a concert, information on a concert location in which the concert is to be held, and information on an admission fee required for watching the concert from a user equipment of a user being logged-in to the user participation concert making system, a survey providing module configured to provide survey information including the concert performing artist information, the concert location information, and the admission fee information to user equipments of a plurality of other users being subscribed to the user participation concert making system, and a controlling module configured to receive survey response information respective to the concert from at least some of the user equipments of the plurality of other users, and to calculate a number of viewer-users intending to watch the concert based upon the received survey response information.

## Description

This application claims the benefit of the Korean Patent Application No. 10-2013-0156338, filed on December 16, 2013, which is hereby incorporated by reference as if fully set forth herein.

### BACKGROUND OF THE INVENTION

### Field of the Invention

The present invention relates to a user participation concert making system and a method for providing the same. And, more particularly, the present invention relates to a user participation concert making system and a method for providing the same that enable a user to personally request for a wanted concert and that enable a number of users intending to watch the requested concert to be determined in advance.

### Discussion of the Related Art

In the modem times, as the essential necessities of life are being sufficiently provided, and as the quality of life is becoming more enhanced, a demand for diverse cultural life experiences is also increasing, and, therefore, a variety of performance cultures is being widely provided.

However, not all of the performances are successful. And, since a large amount of financial budget is required for opening and holding a concert (or performance), organizations planning concerts and performances mostly focus on planning performances that are certain to be successful. Accordingly, since performances focusing solely on popularity and entertainment or amusement are mostly being planned, the general public has difficulty in watching the performances of other diverse artists wanted by the public.

Despite such difficulties, in addition to the popularity or entertainment of a performance, an objective scale for accurately predicting the success and failure of a performance or for accurately predicting viewer demand (or admission demand) is insufficiently provided.

### SUMMARY OF THE INVENTION

Accordingly, the present invention is directed to a user participation concert making system and a method for providing the same that substantially obviate one or more problems due to limitations and disadvantages of the related art.

A technical object of the present invention is to provide a user participation concert making system enabling a general user to designate an artist, a concert location, and a concert ticket price (or admission fee) of a concert (or performance) the user wishes to watch, so as to request for a related concert, and also enabling the general user to organize the corresponding concert when a number of viewers intending to watch the corresponding concert is equal to a greater than a predetermined number.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, according to an exemplary embodiment of the present invention, according to an aspect of the present invention, provided herein is a user participation concert making system including a communicating module configured to receive information on a performing artist performing in a concert, information on a concert location in which the concert is to be held, and information on an admission fee required for watching the concert from a user equipment of a user being logged-in to the user participation concert making system, a survey providing module configured to provide survey information including the concert performing artist information, the concert location information, and the admission fee information to user equipments of a plurality of other users being subscribed to the user participation concert making system, and a controlling module configured to receive survey response information respective to the concert from at least some of the user equipments of the plurality of other users, and to calculate a number of viewer-users intending to watch the concert based upon the received survey response information.

According to the exemplary embodiment, the controlling module may determine whether or not a predetermined advanced payment amount has been wire-transferred from a user having conveyed his (or her) intentions to watch the concert, and the controlling module may calculate the number of users having wire-transferred the advanced payment amount as the number of viewer-users.

According to the exemplary embodiment, the user participation concert making system may further include a concert planning information providing module configured to provide the performing artist information, the concert location information, the admission fee information, and the number of viewer-users to a user equipment of the performing artist or to a user equipment of a concert planner corresponding to the concert.

According to the exemplary embodiment, the user participation concert making system may further include an inputting module configured to receive an estimated expenditure corresponding to the concert, an estimated expenditure corresponding to the performing artist, and expected profit information respective to the concert from the user equipment of the performing artist or the user equipment of the concert planner corresponding to the concert, and a decision-making module configured to determine a possibility of holding the concert based upon the estimated expenditure corresponding to the concert, the estimated expenditure corresponding to the performing artist, the expected profit respective to the concert, the admission fee, and the number of viewer-users.

According to the exemplary embodiment, the user participation concert making system may further include a notifying module configured to transmit a notification signal respective to the concert to at least one of a user equipment of the user and a user equipment of a predetermined manager, when the number of viewer-users is equal to or greater than a predetermined limit value.

According to the exemplary embodiment, the user participation concert making system may further include a calculating module configured to calculate the limit value based upon the estimated expenditure corresponding to the concert, the estimated expenditure corresponding to the performing artist, the expected profit respective to the concert, and the admission fee.

According to another aspect of the present invention, provided herein is a method for providing a user participation concert making system including the steps of having the user participation concert making system receive information on a performing artist performing in a concert, information on a concert location in which the concert is to be held, and information on an admission fee required for watching the concert from a user equipment of a user being logged-in to the user participation concert making system, having the user participation concert making system provide survey information including the concert performing artist information, the concert location information, and the admission fee information to user equipments of a plurality of other users being subscribed to the user participation concert making system, and having the user participation concert making system receive survey response information respective to the concert from at least some of the user equipments of the plurality of other users, and calculate a number of viewer-users intending to watch the concert based upon the received survey response information.

According to the exemplary embodiment, the step of having the user participation concert making system calculate a number of viewer-users includes determining whether or not a predetermined advanced payment amount has been wire-transferred from a user having conveyed his (or her) intentions to watch the concert, and calculating the number of users having wire-transferred the advanced payment amount as the number of viewer-users.

According to the exemplary embodiment, the method may further include providing the performing artist information, the concert location information, the admission fee information, and the number of viewer-users to a user equipment of the performing artist or to a user equipment of a concert planner corresponding to the concert.

According to the exemplary embodiment, the method may further include receiving an estimated expenditure corresponding to the concert, an estimated expenditure corresponding to the performing artist, and expected profit information respective to the concert from the user equipment of the performing artist or the user equipment of the concert planner corresponding to the concert, and determining a possibility of holding the concert based upon the estimated expenditure corresponding to the concert, the estimated expenditure corresponding to the performing artist, the expected profit respective to the concert, the admission fee, and the number of viewer-users.

According to the exemplary embodiment, the method may further include transmitting a notification signal respective to the concert to at least one of a user equipment of the user and a user equipment of a predetermined manager, when the number of viewer-users is equal to or greater than a predetermined limit value.

According to the exemplary embodiment, the method may further include calculating the limit value based upon the estimated expenditure corresponding to the concert, the estimated expenditure corresponding to the performing artist, the expected profit respective to the concert, and the admission fee.

According to yet another aspect of the present invention, provided herein is a computer-readable recording medium having a program for executing the above-described method recorded therein.

According to yet another aspect of the present invention, provided herein is a user participation concert making system including a processor, and a memory configured to have a program stored therein. Herein, when the program is executed by the processor, the program may enable the user participation concert making system to perform the above-described method.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 illustrates a realization environment of a user participation concert making system according to an exemplary embodiment of the present invention;
FIG. 2 illustrates a block view showing a general view of a structure of the user participation concert making system according to the exemplary embodiment of the present invention;
FIG. 3 illustrates an exemplary concert request page being provided to a user equipment of a user requesting for a concert by the user participation concert making system according to the exemplary embodiment of the present invention;
FIG. 4 illustrates a survey information page being provided to user equipments of users requesting for a concert by the user participation concert making system according to the exemplary embodiment of the present invention;
FIG. 5 illustrates a flow chart showing part of a process of calculating a number of concert viewer-users intending to watch a corresponding concert performed by the user participation concert making system according to the exemplary embodiment of the present invention; and
FIG. 6 illustrates a block view showing a general view of a structure of the user participation concert making system according to another exemplary embodiment of the present invention.

### DETAILED DESCRIPTION OF THE INVENTION

Diverse modifications and variations may be carried out on the present invention, so as to configure diverse exemplary embodiment of the present invention. And, therefore, the exemplary embodiments of the present invention will be illustrated in the appended drawings and described in detail in the detailed description of the present invention. However, the present invention will not be limited only to the exemplary embodiments presented herein. And, therefore, it will be apparent that the technical scope and spirit of the present invention includes all modifications, equivalents and replacements of the present invention. Accordingly, in describing the present invention, when it is determined that the detailed description on a related disclosed technology may cause ambiguity in the concept (or idea) of the present invention, the detailed description of the same will be omitted for simplicity.

The terms 'first' and 'second' may be used for describing diverse components (or elements) of the present invention. However, the components of the present invention will not be limited only to the terms used herein. It should be understood that the terms will be used for the sole purpose of differentiating one component from another component.

The terms used in the application of the present invention are merely used to describe a specific exemplary embodiment of the present invention, and are not to be used to limit the present invention. And, therefore, unless clearly mentioned otherwise, singular form expressions include the respective plural form expressions.

In the description of the present invention, the terms "comprise (or include)" or "have" will be used to indicate that a specific characteristic, number, step, operation, component, assembly part, or a combination of two or more of the same exist. And, therefore, it should be understood that the existence or supplemental possibility of one or more of other characteristics, numbers, steps, operations, components, assembly parts, or a combination of two or more of the same shall not be excluded in advance.

Furthermore, in the description of the present invention, when any one component 'transmits' data to another component, this may indicate that the component directly transmits the data to the other component, or that the component transmits the data to the other component through at least one or more other components. Conversely, when any one component 'directly transmits' data to another component, this may indicate that the data are being transmitted through the component to the other component without passing through any other components.

Reference will now be made in detail to the preferred embodiments of the present invention, examples of which are illustrated in the accompanying drawings. Wherever possible, the same reference numbers will be used throughout the drawings to refer to the same or like parts.

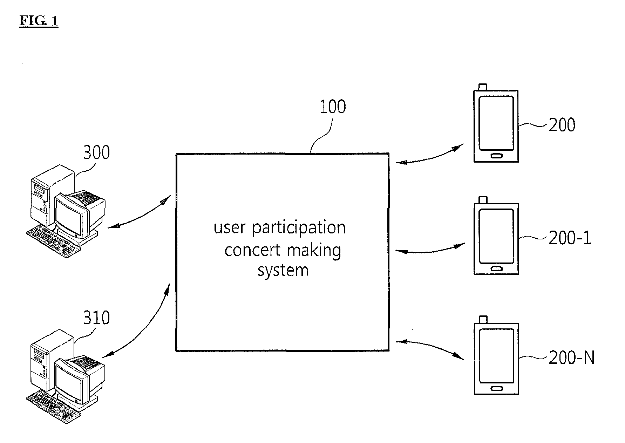

FIG. 1 illustrates a realization environment of a user participation concert making system according to an exemplary embodiment of the present invention. Referring to FIG. 1, in order to realize a method for providing a user participation concert making system according to the exemplary embodiment of the present invention, a user participation concert making system may be provided.

In order to achieve the technical object of the present invention, the user participation concert making system 100 may transceive (transmit and receive) a predetermined set of information to and from a user equipment 200 or 210-1 to 210-N of a user, a user equipment 300 of a manager (or manager user equipment), and a user equipment 400 of a concert planner (or concert planner user equipment) through a wired/wireless network.

The user participation concert making system 100 may enable the user to designate an artist, a concert location, a concert admission fee (or ticket price), and so on through his (or her) user equipment 200, so as to request for a specific concert (or performance). Then, the user participation concert making system 100 may provide the requested concert to the user equipments 210-1 to 210-N of other users subscribed to the user participation concert making system 100, so as to check the number of subscribed users intending to watch the corresponding concert. The user participation concert making system 100 may then provide the number of users intending to watch the requested concert to the manager user equipment 300 or the concert planner user equipment 400, thereby allowing a demand for the corresponding concert to be predicted. Additionally, in case the number of users intending to watch the requested concert is equal to or greater than a predetermined number, the user participation concert making system 100 may notify the manager or concert planner, so that the corresponding concert can be organized.

The user equipment 200 and 210-1 to 210-N may correspond to a computing device including computers, laptop computers, desktop computers, tablet PCs, Personal Digital Assistants (PDAs), and so on. The user equipment 200 and 210-1 to 210-N may also correspond to a wireless computing device including mobile phones, satellite phones, wireless phones, Session Initiation Protocol (SIP), Wireless Local Loop (WLL) stations, smart phones, and handheld devices having other wireless access functions, or the user equipment 200 and 210-1 to 210-N may correspond to a processing device being connected to another wireless modem.

Meanwhile, as shown in FIG. 1, although the user participation concert making system 100 may be realized to be physically separated from the manager user equipment 300, depending upon the exemplary embodiments, the user participation concert making system 100 may also be realized in a structure included in the manager user equipment 300. The manager user equipment 300 may correspond to a predetermined computing system for operating/managing/maintaining and repairing the user participation concert making system 100.

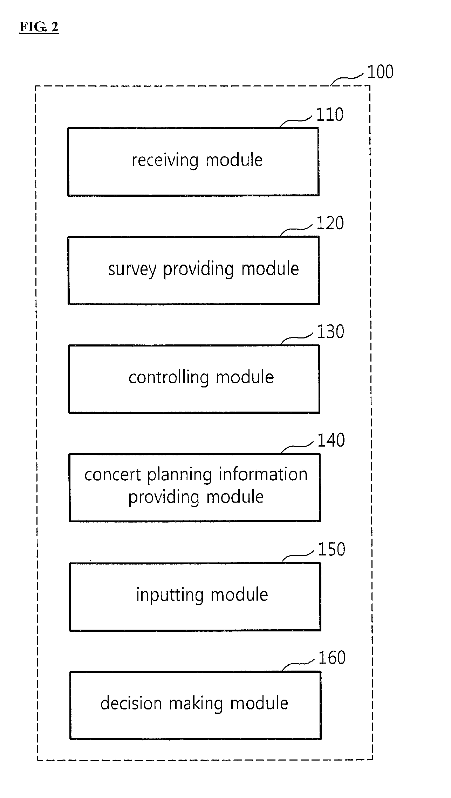

FIG. 2 illustrates a block view showing a structure of the user participation concert making system 100 according to the exemplary embodiment of the present invention.

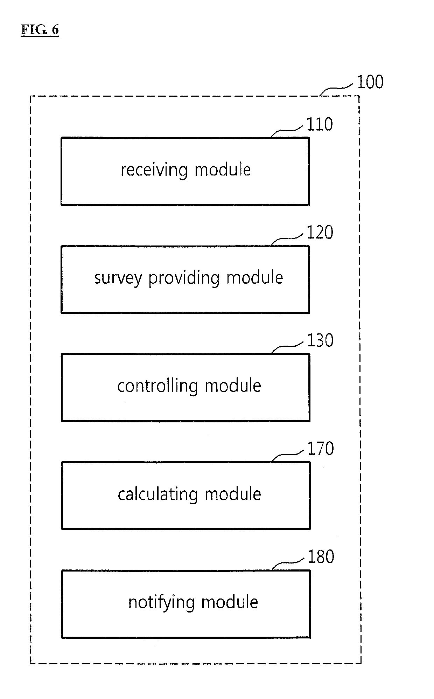

Referring to FIG. 2, the user participation concert making system 100 may include a communicating module 110, a survey providing module 120, a controlling module 130, a concert planning information providing module 140, an inputting module 150, and a decision-making module 160. According to the exemplary embodiment of the present invention, it will be apparent that, among the above-described components, some of the components may not correspond to components that are indispensably required for realizing the present invention, and that, according to the exemplary embodiments, the user participation concert making system 100 may include a larger number of components. For example, the user participation concert making system 100 may further include a calculating module 170 and/or a notifying module 180, which will be described in more detail later on with reference to FIG. 6.

The user participation concert making system 100 may be equipped with a hardware resource and/or software, which is required for realizing the technical spirit of the present invention, and, the user participation concert making system 100 will not necessarily signify a single physical component or a single device. More specifically, the user participation concert making system 100 may signify a logical combination of hardware and/or software being equipped to realize the technical spirit of the present invention, and, when required, by being respectively installed in devices being spaced apart from one another, so as to perform each of the respective functions, the user participation concert making system 100 may also be realized as a group of logical configurations for realizing the technical spirit of the present invention. Moreover, the user participation concert making system 100 may also signify a group of logical configurations being separately realized for each function or role in order to realize the technical spirit of the present invention. For example, each of the communicating module 110, the survey providing module 120, the controlling module 130, the concert planning information providing module 140, the inputting module 150, and/or the decision-making module 160 may be located in a different physical device and may also be located in the same physical device. Additionally, in accordance with the exemplary realizations, each of the communicating module 110, the survey providing module 120, the controlling module 130, the concert planning information providing module 140, the inputting module 150, and/or the decision-making module 160 may be located in a different physical device, and the configurations each located in a different physical device may be organically combined, so as to realize the functions performed by each of the modules.

Furthermore, in the description of the present invention, a module may refer to a functional and structural combination of hardware for performing the technical spirit of the present invention and software for operating the hardware. For example, the module may refer to a logical unit of a predetermined code and a hardware resource for performing the predetermined code. And, it may be easily deduced by any average expert skilled in the technical field of the present invention that a module does not necessarily refer to a physically connected code or a single type of hardware.

The controlling module 130 may control a function and/or resource of the other components (*e.g.,* the communicating module 110, the survey providing module 120, the concert planning information providing module 140, the inputting module 150, and/or the decision-making module 160) included in the user participation concert making system 100 according to the exemplary embodiment of the present invention.

The communicating module 110 may receive information on a performing artist performing in the concert (or concert performing artist information), information on a concert location in which the concert is to be performed (or concert location information), and information on the admission fee required for watching the concert (or admission fee information) from a user equipment 200 of a user logged-in to the user participation concert making system 100.

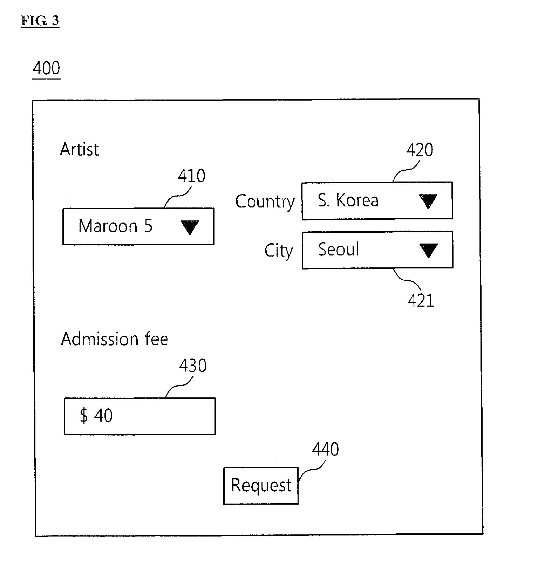

In order to do so, the communicating module 110 may provide an information input page to the user equipment 200 of the corresponding user, as shown in FIG. 3.

FIG. 3 illustrates an exemplary concert request page being provided to a user equipment 200 of a user requesting for a concert by the user participation concert making system 100 according to the exemplary embodiment of the present invention.

As shown in FIG. 3, the concert request page 400 may include an artist information input user interface (UI) 410 configured to input information on an artist, a country information input UI 420 and a city information input UI 421 configured to respectively input information on a concert opening country and a concert opening city in which the concert is to be held (or performed), and an admission fee input UI 430 configured to input an admission fee (*i.e.,* concert ticket cost).

The user requesting for a concert may input information in the respective UI and may select a Request button 440, so as to transmit the concert performing artist information, the concert location information, and the admission fee information to the user participation concert making system 100.

Meanwhile, the survey providing module 120 may provide survey information, which includes the concert performing artist information, the concert location information, and the admission fee information, to user equipments 210-1 to 210-N of a plurality of other users being subscribed to the user participation concert making system 100.

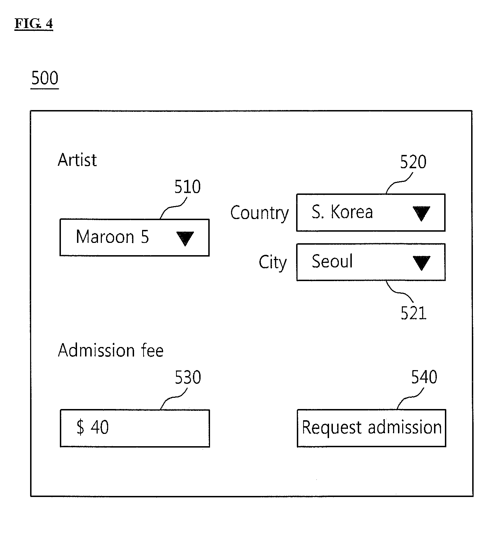

According to the exemplary embodiment, the survey providing module 120 may provide the survey information in the form of a survey information providing page, and an example of the same is shown in FIG. 4.

FIG. 4 illustrates a survey information page being provided to user equipments 210-1 to 210-N of users requesting for a concert by the user participation concert making system 100 according to the exemplary embodiment of the present invention.

As shown in FIG. 4, the survey information page 500 may include an artist information field 510 configured to indicate information on an artist, a country information field 520 and a city information field 521 configured to respectively indicate information on a concert opening country and a concert opening city in which the concert is to be held (or performed), and an admission fee field 530 configured to indicate an admission fee.

The user, who is intending to watch the concert corresponding to the survey that is being carried out, may select a Request Admission button 540 through the survey information page 500, so that the user can transmit survey response information indicating that he (or she) intends to watch the requested concert to the user participation concert making system 100.

Meanwhile, the user participation concert making system 100 may use diverse types of languages, which are disclosed and available to anyone skilled in the field of software, such as html, xml, javascript, lua, VBscript, and so on, so as to generate the concert request page 400 and/or the survey information page 500, which is/are then provided to the user equipments 200 or 210-1 to 210-N. And, in this case, a service according to the present invention may be provided through a web client installed in the user equipment 200 or 210-1 to 210-N. In another exemplary embodiment, the user participation concert making system 100 may provide data in a data format that is pre-agreed upon with the user equipment 200 or 210-1 to 210-N. And, in this case, a dedicated client program or application for using the user participation concert making system 100 according to the present invention may be installed in the user equipment 200 or 210-1 to 210-N of the user.

Meanwhile, although the survey providing module 120 may provide the survey information to the user equipments of all users being subscribed to the user participation concert making system 100, depending upon the realization examples, the survey information may be provided to the user equipments of only a selected number of users.

According to an exemplary embodiment, the survey providing module 120 may select users to whom the survey information is to be provided based upon a concert location and residence region of each user. In order to do so, the controlling module 130 may receive and store information on the residence region from each of the users being subscribed to the user participation concert making system 100. And, the survey providing module 120 may provide the survey information to the user equipments of users residing in a region identical to the concert location, which is included in the survey information, or residing in a region near the concert location, or residing within a predetermined range from the concert location.

According to another exemplary embodiment, the survey providing module 120 may provide the survey information to the user equipments of users requesting for the survey information to be provided. For example, when the user equipment 210-1 transmits a concert search request by using region name and/or artist name as the keyword(s), the controlling module 130 may search for a concert corresponding to the keyword(s) (*i.e.,* a concert matching with a concert location and/or a concert performing artist) among the requested concerts, and the controlling module 130 may then transmit a list of concerts corresponding to the keywords to the user equipment 210-1. Accordingly, the user may select a concert from the received list, and, then, the survey providing module 120 may provide survey information related to the concert, which is selected by the user, to the user equipment 210-1.

Meanwhile, the controlling module 130 receives the survey response information respective to the concert from at least some of the plurality of user equipments of other users through the communicating module 110, and, then, based upon the received survey response information, the controlling module 130 may calculate the number of viewer-users intending to watch the concert.

The controlling module 130 may also calculate the number of users each having transmitted information indicating that he (or she) intends to watch the concert as the number of viewer-users.

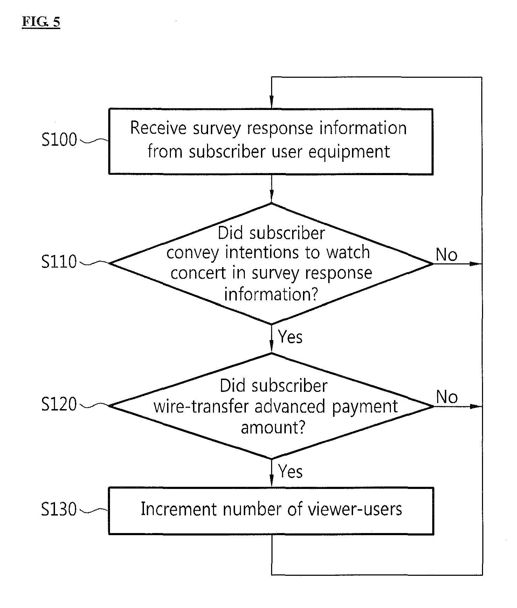

Meanwhile, although the users have conveyed their intentions to watch the concerts, some of the users may not actually watch the corresponding concert. Therefore, in order to verify more concrete intentions to watch the concert, the controlling module 130 may determine whether or not a predetermined amount of advanced payment has been made (or wire-transferred) by a user having conveyed his (or her) intentions to watch the concert. Thereafter, the controlling module 130 may calculate the number of users having made the advanced payment as the number of viewer-users. And, this will hereinafter be described in more detail with reference to FIG. 5.

FIG. 5 illustrates a flow chart showing part of a process of calculating a number of concert viewer-users intending to watch a corresponding concert performed by the controlling module 130.

Referring to FIG. 5, the controlling module 130 may first receive survey response information from the user equipment of a subscriber subscribed to the user participation concert making system 100 (S100).

In case the subscriber has conveyed his (or her) intentions of watching the concert in the survey response information, the controlling module 130 may determine whether or not the subscriber has wire-transferred a predetermined amount of advanced payment (S110 and S120).

If the subscriber has wire-transferred the predetermined amount of advanced payment, the controlling module 130 may increment the number of concert viewer-users by one (S 130).

Each time the controlling module 130 receives concert viewing response from a user (or subscriber), who has not yet transmitted his (or her) response, the controlling module 130 may perform the process steps S100 to S130, and this process may be performed during a predetermined survey period.

Meanwhile, the user participation concert making system 100 may be operated in connection with a predetermined payment system (not shown), and the controlling module 130 may receive information on whether or not the corresponding user has wire-transferred the advanced payment from the payment system. The information on the amount of advanced payment may correspond to an amount or rate (e.g., 20% of the admission fee) predetermined by the manager. Depending upon the exemplary realization, the advanced payment may also correspond to an amount designated by the user having requested for the corresponding concert.

Referring back to FIG. 2, the concert planning information providing module 140 may provide the information on the concert performing artist, information on the concert location, and information on the admission fee to the user equipment of the artist corresponding to the concert or to the user equipment of the concert planner 400 corresponding to the concert.

As described above, by allowing the artist or concert planner involved in the concert to determine detailed information on the estimated viewer-users in advance, the user participation concert making system 100 may enable the artist or concert planner to easily decide whether or not to organize the corresponding concert and/or to easily decide the size (or scale) of the corresponding concert.

Meanwhile, the user participation concert making system 100 according to the exemplary embodiment of the present invention may make the above-described decisions instead of the artist or the concert planner.

In order to do so, the inputting module 150 may receive information on an estimated expenditure respective to the concert, information on an estimated expenditure respective to the performing artist, and information on an expected profit respective to the concert from the user equipment of the performing artist or the user equipment 400 of the concert planner of the corresponding concert. And, based upon the estimated expenditure respective to the concert, the estimated expenditure respective to the performing artist, the expected profit respective to the concert, the admission fee, and the number of viewer-users, the decision-making module 160 may automatically determine a possibility of holding the concert.

Meanwhile, the estimated expenditure corresponding to the concert may include detailed items, such as stage installation cost, on-site operation and management cost, venue rental cost, and so on. And, the estimated expenditure corresponding to the performing artist may include detailed items, such as a minimum guaranteed payscale, a profit share ratio, and so on.

FIG. 6 illustrates a block view showing a general view of a structure of the user participation concert making system according to another exemplary embodiment of the present invention. In describing FIG. 6, detailed description of the contents that are identical to the description provided above or the contents that can be easily understood based upon the description provided above will be omitted for simplicity.

Referring to FIG. 6, the user participation concert making system 100 according to another exemplary embodiment of the present invention may include a communicating module 110, a survey providing module 120, a controlling module 130, a calculating module 170, and a notifying module 180.

The communicating module 110 may receive information on a concert artist performing in the concert, information on a concert location in which the concert is to be performed, and information on the admission fee required for watching the concert from a user equipment 200 of a user logged-in to the user participation concert making system 100. And, the survey providing module 120 may provide survey information, which includes the concert performing artist information, the concert location information, and the admission fee information, to user equipments of a plurality of other users being subscribed to the user participation concert making system. The controlling module 130 may receive the survey response information respective to the concert from at least some of the plurality of user equipments of other users through the communicating module 110, and, then, based upon the received survey response information, the controlling module 130 may calculate the number of viewer-users intending to watch the concert.

Meanwhile, the calculating module 170 may calculate a limit value respective to a number of users having conveyed their intentions to watch the concert based upon the estimated expenditure respective to the concert, the estimated expenditure respective to the performing artist, the expected profit respective to the concert, and the admission fee. For example, the calculating module 170 may calculate a sum of the estimated expenditure respective to the concert, the estimated expenditure respective to the performing artist, the expected profit, so as to calculate minimum sales, and, then, the calculating module 170 may divide the calculated minimum sales by the admission fee, so as to calculate the limit value.

Meanwhile, in case the number of viewer-users is equal to or greater than the limit value, by transmitting a notification signal respective to the concert to at least one of the user equipment 200 of the user or a predetermined manager user equipment 200, the notifying module 180 may be capable of verifying that the concert requested by the user will produce a sufficient amount of profit.

As described above, according to the technical spirit of the present invention, in case the concert of a performing artist requested by the subscriber of the user participation concert making system 100 is successful, knowing that he (or she) has directly contributed to the success of the corresponding concert, the present invention may allow the user to have a high sense of achievement.

Meanwhile, according to the exemplary embodiment of the present invention, the user participation concert making system 100 may include a processor and a memory configured to store a program being executed by the processor. The processor may include a single core CPU or a multi-core CPU. The memory may include a high speed random access memory, and the memory may also include one or more non-volatile memories, such as magnetic disk storage devices, flash memory devices, or other non-volatile solid memory devices. An access to a memory by the processor and other components may be controlled by a memory controller. Herein, when the program is executed by the processor, the program may allow the user participation concert making system 100 according to the exemplary embodiment of the present invention to perform the method for providing the user participation concert making system. For example, when the program is executed by the processor, the user participation concert making system may be controlled to perform the steps of receiving information on a performing artist performing in a concert, information on a concert location in which the concert is to be held, and information on an admission fee required for watching the concert from a user equipment of a user being logged-in to the user participation concert making system, providing survey information including the concert performing artist information, the concert location information, and the admission fee information to user equipments of a plurality of other users being subscribed to the user participation concert making system, and receiving survey response information respective to the concert from at least some of the user equipments of the plurality of other users, and calculating a number of viewer-users intending to watch the concert based upon the received survey response information.

Meanwhile, the method for providing the user participation concert making system according to the exemplary embodiment of the present invention may be realized in the form of a computer-readable program command, so as to be stored in a computer-readable recording medium. The computer-readable recording medium may include all types of recording devices storing data that can be read by a computer system.

The program command being recorded in the medium may correspond to a program command that is specifically designed and configured for the present invention, or the program command may correspond to a program command that is disclosed and available to anyone skilled in or related to computer software.

Examples of the computer-readable recording medium may include magnetic media, such as hard discs, floppy discs, and magnetic tapes, optical media, such as CD-ROMs, DVDs, and so on, magneto-optical media, such as floptical discs, and hardware devices specially configured (or designed) for storing and executing program commands, such as ROMs, RAMs, flash memories, and so on. Additionally, the above-described medium may correspond to a transmitting medium, such as an optical or metallic line, a waveguide, and so on, which includes a carrier wave transmitting a signal designating a program command, a data structure, and so on. Furthermore, the computer-readable recording medium is dispersed (or scattered) within a computer system being connected to a network, and a computer-readable code may be stored in the recording medium and executed by using in a dispersion method.

Examples of a program command may not only include machine language codes, which are created by a compiler, but may also include high-level language codes, which may be executed by a computer.

The above-mentioned hardware equipment may be configured to be operated as one or more software modules for executing the operations of the exemplary embodiment of the present invention, and vice versa.

As described above, the user participation concert making system and the method for providing the same have the following advantages. According to an exemplary embodiment of the present invention, in case a concert of an artist requested by the user is successful, the user may think that he (or she) was directly involved in the success of the corresponding concert, thereby providing the user with a high sense of achievement. Additionally, since an estimated demand of the corresponding concert can be determined in advance, any risk respective to the concert may be reduced, and the concert planner may be capable of easily determining whether or not the corresponding concert will be successful.

It will be apparent to those skilled in the art that various modifications and variations can be made in the present invention without departing from the spirit or scope of the inventions. Thus, it is intended that the present invention covers other realizations and other embodiments of this invention provided they come within the scope of the appended claims and their equivalents.

Therefore, it should be understood that the above-described exemplary embodiments are examples given for all aspects of the present invention and will not limit the present invention. For example, each component that is described as a single body may be dispersed and executed. And, similarly, components that are described to be dispersed may be executed in a combined form.

The scope of the present invention will be indicated in the following appended claims. And, it should be understood that all modifications and variations, which are drawn from the significance and scope of the appended claims and the equivalent concept, are included in the scope of the present invention.

## Claims

1. A user participation concert making system, comprising:
a communicating module configured to receive information on a performing artist performing in a concert, information on a concert location in which the concert is to be held, and information on an admission fee required for watching the concert from a user equipment of a user being logged-in to the user participation concert making system;
a survey providing module configured to provide survey information including the concert performing artist information, the concert location information, and the admission fee information to user equipments of a plurality of other users being subscribed to the user participation concert making system; and
a controlling module configured to receive survey response information respective to the concert from at least some of the user equipments of the plurality of other users, and to calculate a number of viewer-users intending to watch the concert based upon the received survey response information.

2. The user participation concert making system of claim 1, wherein the controlling module determines whether or not a predetermined advanced payment amount has been wire-transferred from a user having conveyed his (or her) intentions to watch the concert, and wherein the controlling module calculates the number of users having wire-transferred the advanced payment amount as the number of viewer-users.

3. The user participation concert making system of claim 1, further comprising:
a concert planning information providing module configured to provide the performing artist information, the concert location information, the admission fee information, and the number of viewer-users to a user equipment of the performing artist or to a user equipment of a concert planner corresponding to the concert.

4. The user participation concert making system of claim 3, further comprising:
an inputting module configured to receive an estimated expenditure corresponding to the concert, an estimated expenditure corresponding to the performing artist, and expected profit information respective to the concert from the user equipment of the performing artist or the user equipment of the concert planner corresponding to the concert; and
a decision-making module configured to determine a possibility of holding the concert based upon the estimated expenditure corresponding to the concert, the estimated expenditure corresponding to the performing artist, the expected profit respective to the concert, the admission fee, and the number of viewer-users.

5. The user participation concert making system of claim 1, further comprising:
a notifying module configured to transmit a notification signal respective to the concert to at least one of a user equipment of the user and a user equipment of a predetermined manager, when the number of viewer-users is equal to or greater than a predetermined limit value.

6. The user participation concert making system of claim 1, further comprising:
a calculating module configured to calculate the limit value based upon the estimated expenditure corresponding to the concert, the estimated expenditure corresponding to the performing artist, the expected profit respective to the concert, and the admission fee.

7. A method for providing a user participation concert making system, comprising the steps of:
having the user participation concert making system receive information on a performing artist performing in a concert, information on a concert location in which the concert is to be held, and information on an admission fee required for watching the concert from a user equipment of a user being logged-in to the user participation concert making system;
having the user participation concert making system provide survey information including the concert performing artist information, the concert location information, and the admission fee information to user equipments of a plurality of other users being subscribed to the user participation concert making system; and
having the user participation concert making system receive survey response information respective to the concert from at least some of the user equipments of the plurality of other users, and calculate a number of viewer-users intending to watch the concert based upon the received survey response information.

8. The method of claim 7, wherein the step of having the user participation concert making system calculate a number of viewer-users comprises:
determining whether or not a predetermined advanced payment amount has been wire-transferred from a user having conveyed his (or her) intentions to watch the concert; and
calculating the number of users having wire-transferred the advanced payment amount as the number of viewer-users.

9. The method of claim 7, further comprising a step of:
providing the performing artist information, the concert location information, the admission fee information, and the number of viewer-users to a user equipment of the performing artist or to a user equipment of a concert planner corresponding to the concert.

10. The method of claim 9, further comprising the steps of:
receiving an estimated expenditure corresponding to the concert, an estimated expenditure corresponding to the performing artist, and expected profit information respective to the concert from the user equipment of the performing artist or the user equipment of the concert planner corresponding to the concert; and
determining a possibility of holding the concert based upon the estimated expenditure corresponding to the concert, the estimated expenditure corresponding to the performing artist, the expected profit respective to the concert, the admission fee, and the number of viewer-users.

11. The method of claim 7, further comprising a step of:
transmitting a notification signal respective to the concert to at least one of a user equipment of the user and a user equipment of a predetermined manager, when the number of viewer-users is equal to or greater than a predetermined limit value.

12. The method of claim 11, further comprising a step of:
calculating the limit value based upon the estimated expenditure corresponding to the concert, the estimated expenditure corresponding to the performing artist, the expected profit respective to the concert, and the admission fee.

13. A user participation concert making system, comprising:
a processor; and
a memory configured to have a program stored therein,
wherein, when the program is executed by the processor, the program enables the user participation concert making system to perform the method of claim 7.
